Europäisches Patentamt

European Patent Office

Office européen des brevets

(19)

(11) Publication number: **0 273 758 B1**

## (12) EUROPEAN PATENT SPECIFICATION

(45) Date of publication of patent specification: **04.09.91**      (51) Int. Cl.⁵: **D21C  11/00**

(21) Application number: **87311492.0**

(22) Date of filing: **29.12.87**

(54) **Procedure for separating lignin and phenol from phenol solutions.**

(30) Priority: **31.12.86 FI 865359**

(43) Date of publication of application:
**06.07.88 Bulletin  88/27**

(45) Publication of the grant of the patent:
**04.09.91 Bulletin  91/36**

(84) Designated Contracting States:
**AT DE FR IT SE**

(56) References cited:
**EP-A- 0 082 116**

(73) Proprietor: **NESTE OY**
**Keilaniemi**
**SF-02150 Espoo 15(FI)**

(72) Inventor: **Ekman, Kurt**
**Jokikatu 23 B 10**
**SF-01600 Porvoo(FI)**

(74) Representative: **Lamb, John Baxter et al**
**MARKS & CLERK 57/60 Lincoln's Inn Fields**
**London WC2A 3LS(GB)**

## Description

The present invention concerns separation of lignin from solutions containing phenol. In particular, the invention concerns separation of lignin and phenol from phenol-containing digesting solutions obtained when extracting lignocellulosic materials with acid-catalyzed phenol solutions.

The use of phenol and other phenolic compounds towards separating lignin from wood is known in the art. Regarding the state of art, reference is made e.g. to Schweers, Chemtech 1974, 491, and to Applied Polymer Symposium 28, 277 (1975). Briefly described, the method comprises treatment of lignocellulosic materials with a solution containing phenol, whereby the lignin can be solved and the cellulose and hemicellulose components set free.

Dual problems are associated with the treatment of solutions obtained in phenol digestion of lignocellulosic materials. The lignin in the solutions should be recovered with maximal ease and in an energy-economic way, and on the other hand the phenol in the solution should be separable and returnable to the process. Separation of lignin from the organic digesting solution in phenol digestion of lignocellulosic material has received very little attention, owing to the fact that main emphasis has been placed on phenol recovery and recirculation and on utilizing as digesting chemicals those various phenol compounds which are obtained from lignin itself.

One way to recover lignin and to recirculate phenol from the organic phase of the phenol digestion process is distilling the free phenol either at atmospheric or subatmospheric pressure and solving the distillation residue in a suitable solvent, such as acetone or dioxane. This organic solution may be precipitated in an organic solvent, such as diethylether or toluene. The lignin thus precipitated is then isolated by filtering or centrifuging, and it is washed with pure ether or toluene. The state of art of this kind is represented e.g. by Schweers et al., Holzforschung 26 (1972),3, p.102. This precipitation method is however difficult to apply on industrial scale, for a number of reasons. Among the difficulties may first be mentioned that on precipitation with the aid of an organic fluid part of the lignin will remain in solution, that is, fractioning of lignin takes place. This lignin fraction has turned out to be difficult to isolate and it remains solved in the phenol residue. Secondly, handling large quantities of organic liquids is awkward and dangerous on industrial scale and requires costly apparatus investments.

Another way to utilize the lignin in phenol digestion is, after distilling the free phenol contained in the organic phase, to subject the lignin residue either to pyrolysis (cf. Schweers et al., Das Papier 26 (IUA), p.585-590 (1972)) or to hydrocracking. The lignin will decompose to various phenolic compounds. Attempts have been made to use these compounds together with the free phenol isolated from the digesting solution, in treatment of fresh digesting solution, whereby the process would become self-supporting as regards make-up phenol. This however entails remarkable difficulties in the digesting process proper because the characteristics of the pulps that are obtained are not constant: they change in accordance with the variations in composition of the digesting solution. Moreover, pyrolysis as well as hydrocracking requires exceedingly heavy plant equipment which implies high investments and thus impairs the economy of the entire phenol digestion process.

The object of the invention is to provide a lignin separation procedure which is free of the drawbacks above described and which solves the problems associated both with lignin separation and with phenol recirculation. It is thus understood that the invention concerns a procedure for separating lignin and recovering phenol from phenol solutions which have been obtained on treating lignocellulosic materials with solutions containing phenol, and the invention is characterized in that it comprises, at least, the following steps:-

(1) the phenol solution is extracted with water or with aqueous solution at elevated temperature, thereby obtaining an aqueous phase containing phenol and an organic phase containing lignin;

(2) the temperature of the aqueous phase is lowered so that a phenol phase is produced which has low water content, and an aqueous phase with low lignin content;

(3) the aqueous phase is returned to step (1) and the lignin is recovered from the organic phase.

In the procedure of the invention use is made, on one hand, of the different equilibria of water/phenol solutios at different temperatures and on the other hand of the changing phenol:water:lignin equilibrium in repeated extractions. In the literature the following data are found concerning the equilibrium of water/phenol solutions at different temperatures:-

| Temperature, °C | Water/Phenol | Aqueous phase, % by wt. | Phenol phase, % by wt. | $K=X_w/X$ |
|---|---|---|---|---|
| 60 | Water | 85 | 44 | 1.93 |
| | Phenol | 15 | 56 | 0.286 |
| 40 | Water | 91.5 | 33.9 | 2.70 |
| | Phenol | 8.5 | 66.2 | 0.129 |
| 18 | Water | 93.8 | 27.7 | 3.36 |
| | Phenol | 6.92 | 72.1 | 0.096 |

As taught by the invention, phenol-containing solution which has been obtained on treating lignocellulosic materials with solutions containing phenol are extracted in a first step with water at elevated temperature. The appropriate temperature for extraction is selectable within the range from 30 to 80°C, advantageously within the range from 40 to 60°C. The water component may be just water, but advantageously to this purpose is used phenol-containing solution with high water content, which has been obtained in a step described further on, and which may also contain small amounts of lignin, or washing waters obtained in washing the lignin separated by the procedure of the invention.

The temperature in the extraction step may be controlled in a variety of ways, depending e.g. on the temperature of the phenol-containing solution arriving at extraction. It is however advantageous to proceed so that the lignin-containing phenol solution coming to extraction as well as the aqueous solution serving as extractant are both separately heated to the temperature that has been selected for the extraction process.

As result from the extraction carried out at elevated temperature one obtains a phenol-containing aqueous phase and a lignin-containning organic phase which are easily separable e.g. by decanting.

The second essential step in the procedure of the invention is lowering the temperature of the phenol-containing aqueous phase obtained after the water extraction at elevated temperature which has just been described. The temperature may be lowered in various ways; one suitable way is to conduct the aqueous phase through a heat exchanger. As the temperature is lowered, two strata are again formed. One, phenol-containing stratum contains part of the phenol and only a minor quantity of water, and this stratum is easy to separate, for instance by decanting. The other, water-containing stratum contains part of the phenol and small quantities of lignin, and it is advantaegously used in the above-described water extraction at elevated temperature.

From the lignin-containing organic phase obtained as result in the water extraction at elevated temperature the lignin is easily recoverable by precipitation with water. The precipitation temperature suitable in view of lignin separation is 15 to 25°C. The precipitated lignin may then be recovered by filtering or centrifuging, and it may be further purified by washing it with hot water. The wash waters are advantageously utilized in the above-mentioned water extractions.

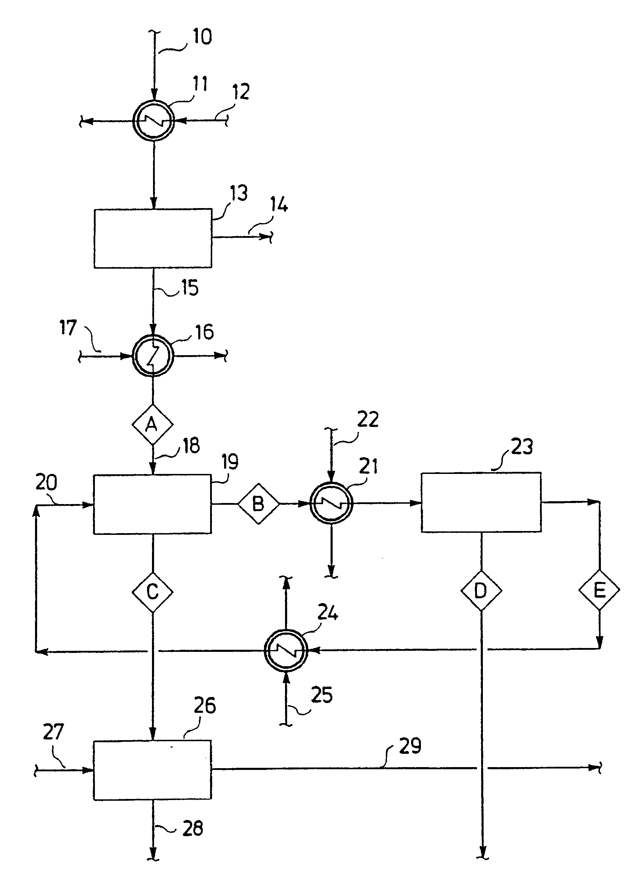

The invention is described in the following, referring to the attached figure, which presents the flow chart of a process meant for applying the invention.

In the process of the figure, the hot lignin-containing phenol solution 10 coming from the lignocellulosic material phenol digestion is first conducted through a heat exchanger 11, cooled by cooling fluid 12, into a decanter 13, where the organic phase 15 containing phenol and lignin is separated from the aqueous phase 14, the latter being returned to the digestion process. The organic phase 15 is conducted to a heat exchanger 16, heated by a fluid 17, and in which the temperature of the organic phase is elevated to 30-80°C, advantageously to 40-60°C. The heated phase A is conducted in a flow 18 to the extraction means 19, in which at the same time water 20 is introduced, which is advantageously heated to the same temperature as the organic phase 19. In the extraction means 19 the phenol-containing aqueous phase B and the lignin-containing organic phase C are formed.

The aqueous phase B is conducted through a heat exchanger 21, cooled by cooling fluid 22, into a decanter 23, where a low water content phenol phase D and a low water content aqueous phase E are formed. The aqueous phase E is returned to the extraction means 19 through a heat exchanger 24 heated by heating fluid 25, thereby constituting the water flow 20 required in extraction. The phenol-containing phase D is advantageously directly used to prepare fresh digesting solution.

The lignin-containing phase C departing from the extraction means 19 is then conducted to a filter 26, where with the aid of water 27 the lignin will precipitate and depart as a flow 28 to further refining steps.

The aqueous phase 29, from which the lignin has been precipitated, may be used towards preparing digesting solution or, if required, to separate lignin in the extraction means 19 after its temperature has been raised to proper height.

The invention is further illustrated by the following, non-restrictive examples.

Example 1

A study was made of lignin and phenol separation from the organic phase obtained in phenol digestion of cellulose, said phase having the following composition:-

Water       70% by wt.
Phenol      23% by wt.
Lignin       3% by wt.
Sugars abt. 2% by wt.
Extracted substances       abt. 1.7% by wt.
Org. phase:extr. water       1:2
Number of extractions       3
Extraction temperature       60°C

The extractions were carried out in charge processes, and the composition of the phenol and aqueous phases was analyzed after each extraction, calculating the phenol:water:lignin equilibria. The results are shown in Table 1.

## Table 1

| Phase | Extraction No. | Aqueous phase, % by wt. | Phenol phase, % by wt. | $K = X_w/X$ |
|-------|---------------|-------------------------|------------------------|-------------|
| Water | I | 85.99 | 33.73 | 2.55 |
| Phenol | | 13.88 | 62.03 | 0.224 |
| Lignin | | 0.13 | 4.24 | 0.0307 |
| Water | II | 87.89 | 19,97 | 4.40 |
| Phenol | | 11.99 | 71.46 | 0.168 |
| Lignin | | 0.12 | 9.57 | 0.0140 |
| Water | III | 89.01 | 7.18 | 12.40 |
| Phenol | | 10.79 | 79.50 | 0.136 |
| Lignin | | 0.20 | 13.32 | 0.0150 |

Example 2

The organic phase was extracted as in Example 1, except that the extraction temperature was 40°C. The equilibria that were calculated are seen in Table 2.

## Table 2

| Phase | Extraction No. | Aqueous phase, % by wt. | Phenol phase, % by wt. | K=X$_w$/X |
|---|---|---|---|---|
| Water | I | 90.35 | 27.04 | 3.34 |
| Phenol | | 9.68 | 68.92 | 0.139 |
| Lignin | | 0.05 | 4.04 | 0.0124 |
| Water | II | 90.63 | 23.22 | 3.90 |
| Phenol | | 9.35 | 70.91 | 0.132 |
| Lignin | | 0.02 | 5.87 | 0.0034 |
| Water | III | 89.30 | 19.48 | 4.58 |
| Phenol | | 10.50 | 72.38 | 0.145 |
| Lignin | | 0.20 | 8.13 | 0.0246 |

Example 3

Example 1 was repeated, with the difference that the organic phase was extracted with the proportion org. phase:water = 1:3. The equilibria that were calculated are seen in Table 3.

## Table 3

| Phase | Extraction No. | Aqueous phase, % by wt. | Phenol phase, % by wt. |
|---|---|---|---|
| Water | I | 90.19 | 35 |
| Phenol | | 9.93 | 61.4 |
| Lignin | | – | – |
| Water | II | 92.1 | 32.1 |
| Phenol | | 9.37 | 61.4 |
| Lignin | | – | – |
| Water | III | 87.1 | 35 |
| Phenol | | 9.70 | 45.6 |
| Lignin | | – | 12.0 |

Example 4

The embodiment depicted in the figure was simulated on the basis of the results from laboratory extractions and of data from the literature.

Simulation revealed that part of the lignin will circulate (flow D in the figure) with the phenol back to the pulp line, as is evident from the first part of Table 4. Lignin therefore accumulates in the organic phase. In the second part of Table 4 is presented the lignin balance when the lignin content of the organic phase has increased to be tenfold. A sufficient quantity of lignin will then already depart in the product of the extracting means (flow C in the figure) for accumulation to stop.

**Table 4**

|  | A kg/h | A % b.w. | B kg/h | B % b.w. | D kg/h | D % b.w. | E kg/h | E % b.w. | C kg/h | C % b.w. |
|---|---|---|---|---|---|---|---|---|---|---|
| Water | 27.82 | 27.82 | 636.60 | 84.99 | 25.30 | 27.7 | 612.60 | 93.10 | 3.92 | 44.04 |
| Phenol | 71.97 | 71.97 | 112.30 | 14.99 | 65.70 | 72.12 | 45.40 | 6.90 | 4.98 | 55.96 |
| Lignin | 0.2135 | 0.2135 | 0.1618 | 0.0216 | 0.1509 | 0.1657 | 0.0109 | 0.0017 | 0.0641 | 0.72 |
| Sum | 100 | 100 | 749 | 100 | 91 | 100 | 658 | 100 | 9 | 101 |

|  | A kg/h | A % b.w. | B kg/h | B % b.w. | D kg/h | D % b.w. | E kg/h | E % b.w. | C kg/h | C % b.w. |
|---|---|---|---|---|---|---|---|---|---|---|
| Water | 27.82 | 27.30 | 636.60 | 84.88 | 25.30 | 27.50 | 612.60 | 93.10 | 3.65 | 41.01 |
| Phenol | 71.97 | 70.61 | 112.30 | 14.97 | 65.70 | 71.41 | 45.40 | 6.90 | 4.64 | 52.13 |
| Lignin | 2.135 | 2.09 | 1.6202 | 0.216 | 1.524 | 1.6565 | 0.109 | 0.0166 | 0.6409 | 7.20 |
| Sum | 102 | 100 | 750 | 100 | 92 | 101 | 658 | 100 | 9 | 100 |

## Claims

1. A process for separating lignin and recovering phenol from a phenol solution obtained by treating a lignocellulose-containing material with a phenol-containing solution, characterized in that it comprises the steps of:-

(1) extracting the phenol solution with water or with an aqueous solution at elevated temperature to give a phenol-containing aqueous phase and a lignin-containing organic phase;

(2) reducing the temperature of the phenol-containing aqueous phase so that there is formed a phenol phase of low water content, and an aqueous phase of low lignin content; and

(3) the low lignin content aqueous phase is returned to step (1) and lignin is recovered from the lignin-containing organic phase produced in step (2).

2. A process as claimed in claim 1, characterized in that the extraction of the phenol solution is carried out at a temperature of from 30 to 80° C, preferably from 40 to 60° C.

3. A process as claimed in claim 1 or claim 2 characterized in that the phenol phase obtained by extracting the phenol solution at elevated temperature is returned for the preparation of fresh digesting solution.

4. A process as claimed in any one of the preceding claims, characterized in that the lignin-containing organic phase from step (2) is treated with water so that lignin precipitates and can be mechanically separated.

**Revendications**

1. Un procédé pour séparer la lignine et récupérer le phénol d'une solution de phénol obtenue par traitement d'une matière contenant de la lignocellulose avec une solution contenant du phénol, caractérisé en ce qu'il comprend les étapes de :

(1) extraction de la solution de phénol avec de l'eau ou avec une solution aqueuse à température élevée pour obtenir une phase aqueuse contenant du phénol et une phase organique contenant de la lignine ;

(2) abaissement de la température de la phase aqueuse contenant du phénol de façon à former une phase de phénol à faible teneur en eau et une phase aqueuse à faible teneur en lignine : et

(3) retour de la phase aqueuse à faible teneur en lignine dans l'étape (1) et récupération de la lignine de la phase organique contenant de la lignine produite dans l'étape (2).

2. Un procédé selon la revendication 1, caractérisé en ce que l'extraction de la solution de phénol est effectuée à une température de 30 à 80°C, de préférence de 40 à 60° C.

3. Un procédé selon la revendication 1 ou la revendication 2, caractérisé en ce que la phase de phénol obtenue par extraction de la solution de phénol à température élevée est renvoyée pour la préparation d'une solution de digestion fraîche.

4. Un procédé selon l'une quelconque des revendications précédentes, caractérisé en ce que la phase organique contenant de la lignine de l'étape (2) est traitée avec de l'eau pour que la lignine précipite et puisse être séparée mécaniquement.

**Patentansprüche**

1. Verfahren zu Abtrennung von Lignin und Gewinnung von Phenol aus einer Phenollösung, die man durch Behandlung eines Lignozellulose enthaltenden Materials mit einer Phenol enthaltenden Lösung erhalten hat, dadurch gekennzeichnet, daß es folgende Schritte aufweist:

(1) Extrahieren der Phenollösung mit Wasser oder mit einer wäßrigen Lösung bei erhöhter Temperatur, um eine Phenol enthaltende wäßrige Phase und eine Lignin enthaltende organische Phase zu liefern;

(2) Verringerung der Temperatur er Phenol enthaltenden wäßrigen Phase, so daß eine Phenolphase geringen Wassergehaltes und eine wäßrige Phase mit geringem Ligningehalt gebildet werden und

(3) Rückführen der wäßrigen Phase mit geringem Ligningehalt in die Stufe (1) und Gewinnen von Lignin aus der Lignin enthaltenden organischen Phase gemäß Stufe (2).

2. Verfahren nach Anspruch 1, dadurch gekennzeichnet, daß die Extraktion der Phenollösung bei einer Temperatur von 30 bis 80° C, vorzugsweise von 40 bis 60° C, durchgeführt wird.

3. Verfahren nach Anspruch 1 oder 2, dadurch gekennzeichnet, daß die die Phenolphase, die durch Extraktion der Phenollösung bei erhöhter Temperatur erhalten wird, zur Herstellung frischer Aufschlußlösung rückgeführt wird.

4. Verfahren nach einem der vorhergehenden Ansprüche, dadurch gekenn gexennzeichnet, daß die Lignin enthaltende, organische Phase aus Stufe (2) mit Wasser behandelt wird, so daß Lignin ausfällt und mechanisch abgetrennt werden kann.